# EUROPÄISCHE PATENTANMELDUNG

(11) **EP 1 394 081 A2**
(43) Veröffentlichungstag der Anmeldung: **03.03.2004**
(21) Anmeldenummer: 03405568.1
(22) Anmeldetag: 31.07.2003
(51) Int. Cl.: B65G 47/08, B65G 47/51

(54) **Vorrichtung zur diskontinuierlichen Übernahme von Hülsen oder Tuben von einer Produktionsmachine**

(30) Priorität: 08.08.2002 CH 20021378
(71) Anmelder: Texa AG, 7023 Haldenstein (CH)
(72) Erfinder: Benz, Gottlieb, 8890 Flums (CH)
(74) Vertreter: Patentanwälte Feldmann & Partner AG

(57) **Zusammenfassung**

Es bestehen Produktionsmaschinen zur Fertigung von Tuben oder Hülsen (T), die einen diskontinuierlichen, gruppenweisen Ausstoss von Tuben oder Hülsen (T) haben. Die nachfolgende Packmaschine benötigt jedoch eine kontinuierliche Zufuhr der Hülsen oder Tuben.

Die Erfindung schafft eine Vorrichtung, welche einen Kettenförderer mit einer Förderstrecke (13) umfasst. Die Förderstrecke (13), welche die entsprechenden Übergabestrecken (3) der Produktionsmaschine bzw. der Packmaschine (4) überlappt, ist auf einen Wagen gelagert und ist in Förderrichtung (F) vor- und zurückbewegbar. Hierdurch wird erreicht, dass der Kettenförderer im Moment der Übergabe der Tuben oder Hülsen (T) von der Produktionsmaschine an die Übernahmevorrichtung scheinbar still steht.

## Beschreibung

Die vorliegende Erfindung betrifft eine Vorrichtung zur diskontinuierlichen Übernahme von Hülsen oder Tuben von einer Produktionsmaschine und zur kontinuierlichen Abgabe an eine Packmaschine, die je eine fest angeordnete Übergabestrecke aufweisen.

Üblicherweise werden Tuben und Hülsen zur Verpackung von flüssigen und/oder pasteusen Stoffen verwendet. Die Tuben oder Hülsen werden dabei praktisch fertiggestellt, normalerweise jedoch nicht gleich abgefüllt. Entsprechend werden solche Tuben oder Hülsen somit möglichst raumsparend verpackt, wobei dies entweder in Schachteln erfolgen kann, oder in der Form von umreiften, normalerweise Sechskantbündeln geschieht.

In den Packmaschinen werden die Hülsen oder Tuben mittels einem Kettenförderer mit Schalen einer entsprechenden Gruppiervorrichtung zugeführt, in der die Tuben oder Hülsen zu entsprechenden, einer Schicht bildenden Gruppen formiert werden und in eine Zwischenform oder in eine Schachtel geschoben werden. Diese Packmaschinen erfordern eine kontinuierliche Zuführung der zu verpackenden Hülsen oder Tuben.

Bei vielen Produktionsmaschinen fallen die hergestellten Tuben oder Hülsen kontinuierlich an. Sie werden entsprechend über Kettenförderer mit prismenförmigen Aufnahmen abgeführt. Bei solchen Produktionsmaschinen ist die Übergabe an die Packmaschine praktisch ohne Zwischenschritt möglich. Es sind auf dem Markt jedoch auch verschiedene Tuben- oder Hülsenproduktionsmaschinen bekannt, bei denen die fertigen Tuben oder Hülsen gruppenweise ausgestossen werden.

Hierbei variieren die Grössen der Gruppen entsprechend der Grösse der Hülsen beziehungsweise der Tuben. Bei Tuben mit kleinen Durchmessern kann eine entsprechende Gruppe fünf Tuben umfassen, während bei Tuben mit grossen Durchmessern eine solche Gruppe beispielsweise lediglich drei Tuben umfasst.

Bei einer solchen Übergabe von einer diskontinuierlich anliefernden Produktionsmaschine auf eine Packmaschine wurde bisher üblicherweise mit siloartigen Zwischenspeichern gearbeitet, von denen aus dann eine kontinuierliche Abgabe an die Packmaschine erfolgen konnte. Da, wie bereits erwähnt, die Tuben oder Hülsen jedoch bereits ihren Endzustand haben und entsprechend bereits bedruckt oder beschichtet sind, wurden die Hülsen oder Tuben bei solchen siloartigen Zwischenstationen vielfach geringfügig deformiert, und es entstanden an den Aussenflächen oftmals unschöne Kratzspuren. Die entsprechenden Deformierungen der Tuben beziehungsweise Hülsen ergaben dann bei der Packmaschine Probleme, da bei einer Gruppe von Hülsen oder Tuben mit ovalen Querschnitten die Länge der Gruppe nicht mehr stimmt und sich die Tuben oder Hülsen oftmals nicht mehr in die Schachteln einschieben lassen. Diese Probleme lassen sich nur dann lösen, wenn dafür gesorgt ist, dass bei der diskontinuierlichen Übernahme der Hülsen oder Tuben von einer Produktionsmaschine und zur kontinuierlichen Abgabe derselben an eine Packmaschine jede Tube oder Hülse praktisch nie mit einer anderen Tube oder Hülse in Berührung kommt.

Handelt es sich bei den zu übergebenden Tuben um relativ kleine Tuben, so sind diese wegen der bereits montierten Verschlüsse extrem kopflastig. Dies hat sich als ein schwieriges Problem erwiesen. Bei der direkten Übergabe von der Produktionsmaschine in Silos entstehen hierbei noch mehr Schädigungen. Bei der Übergabe auf Rollenförderer fallen die Tuben schräg, und es kommt zu Verdrehungen.

Es ist die Aufgabe der vorliegenden Erfindung eine Vorrichtung zu schaffen, mittels der Hülsen oder Tuben, die diskontinuierlich von einer Produktionsmaschine kommen, ohne eine Zwischenlagerung auf einen Kettenförderer mit Schalen einer Packmaschine zu übergeben.

Diese Aufgabe löst eine Vorrichtung der eingangs genannten Art, die sich dadurch auszeichnet, dass sie einen Endlos-Kettenförderer mit Schalen umfasst, dessen Förderstrecke relativ zur Produktionsmaschine und Packmaschine in Förderrichtung der Förderstrecke vor und zurück bewegbar ist.

Weitere vorteilhafte Ausgestaltungsformen gehen aus den abhängigen Ansprüchen hervor und deren Bedeutung und Wirkungsweise werden in der nachfolgenden Beschreibung unter Bezugnahme auf die beiliegenden Zeichnungen erläutert.

In der anliegenden Zeichnung ist ein bevorzugtes Ausführungsbeispiel rein schematisch dargestellt und nachfolgend erläutert.

Es zeigt:
- Figur 1: die Anordnung der Übernahmevorrichtung zwischen der Produktionsmaschine und der Packmaschine in einer schematischen Seitenansicht und
- Figur 2: eine Aufsicht von oben auf die Packmaschine und die daran integrierte Übernahmevorrichtung.
- Figur 3: ist eine schematische Darstellung der Übernahmevorrichtung, und
- Figur 4: zeigt drei Ablaufsituationen, bei der Übergabe der Tuben oder Hülsen von der Produktionsmaschine auf die Übernahmevorrichtung.

Die erfindungsgemässe Übernahmevorrichtung, die mit 1 bezeichnet ist, ist zwischen einer Produktionsmaschine 2 und einer Packmaschine 4 angeordnet. Die Produktionsmaschine 2 besitzt eine Übergabestrecke 3, welche eine Förderstrecke 13 der Übernahmevorrichtung 1 auf einer Teilstrecke übergreift. Auch die Packmaschine 4 besitzt eine Übergabestrecke 5, die jedoch die Förderstrecke 13 der Übernahmevorrichtung 1 streckenweise untergreift. Logischerweise erfolgen die Übergaben einerseits von der Produktionsmaschine auf die Übernahmevorrichtung 1 und andererseits von der Übernahmevorrichtung 1 auf die Packmaschine 4 in diesen beiden Überlappungsbereichen. Entsprechend müssen die Anordnungen der Übernahmevorrichtung der Produktionsmaschine und der Packmaschine 4 exakt aufeinander abgestimmt werden. Sinnvollerweise geschieht dies, indem die Übernahmevorrichtung 1 baulich mit der Packmaschine 4 vereint wird. Bezüglich der Ausgestaltung der Packmaschinen wird insbesondere auf die EP-A-1'114'784 verwiesen.

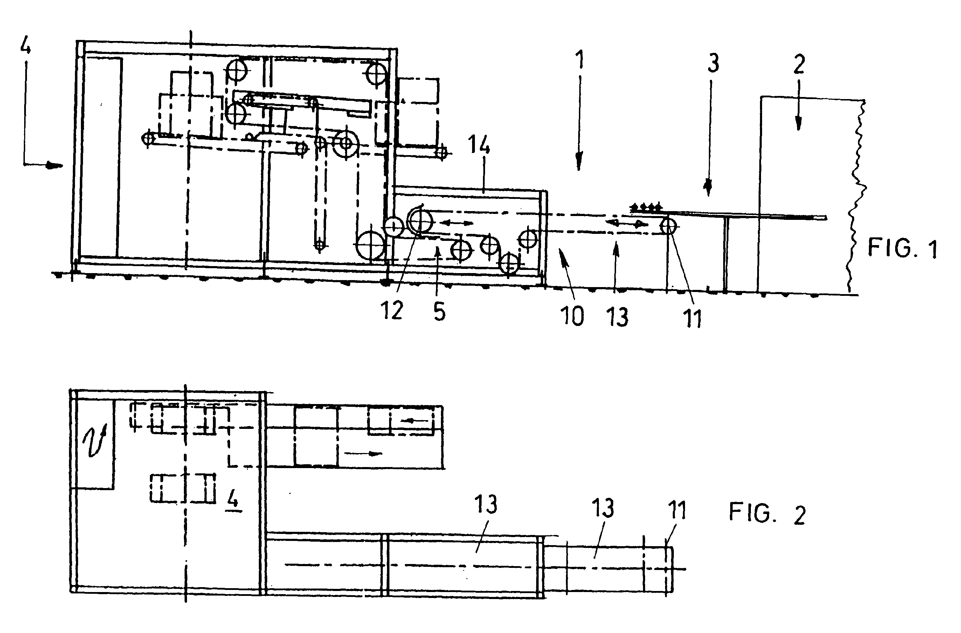

Die Übernahmevorrichtung 1, die in einem Gestell 14 (siehe Figur 1) montiert ist, besitzt als wesentliche Komponente eine Förderstrecke 13, die aus einem nicht dargestellten Rahmen besteht und als ein Wagen konzipiert ist. Im Rahmen gelagert sind die beiden Endumlaufachsen 11 und 12, wobei die Endumlaufachse 11 annahmeseitig, d.h. im Bereich der Übernahme von der Produktionsmaschine, angeordnet ist, während die Endumlaufachse 12 abgabeseitig, d.h. im Übergabebereich auf die Packmaschine 4, angeordnet ist. Im Rahmen des Wagens sind mehrere Wagenrollen 15 angeordnet, die auf einer Laufschiene 16, die entweder durchgehend oder auch nur abschnittsweise gestaltet sein kann, laufen. Die Laufschiene 16 selber ist fest mit dem Gestell 14 verbunden. Auf der Laufschiene 16 kann somit die gesamte Förderstrecke 13 in der Förderrichtung gemäss dem Pfeil F vor und zurück bewegt werden. Die Förderstrecke 13 ist im Prinzip die horizontale Gesamtausdehnung der als Kettenförderer gestalteten Übernahmevorrichtung. Der Kettenförderer besteht aus zwei parallelen Endlosketten, und die laufen über entsprechende Kettenräder 20 bis 24. Die beiden Kettenräder 20 und 21 sind auf den Endumlaufachsen 11 und 12 angeordnet, während die Kettenräder 22 und 23 im unteren Rücklaufbereich der Ketten angeordnet sind und als Umlenkkettenräder 22, 23 gestaltet sind. Das Kettenrad 24 ist auf einer getriebenen Welle 25 angeordnet, auf der auch ein Kettenrad 26 montiert ist, auf der über eine Kette 27 ein Antriebsmotor M den gesamten Kettenförderer antreibt. Auf derselben Welle 25 ist schliesslich noch ein Exzenterantriebskettenrad 28 fest angeordnet. Dieses treibt über eine Kette 29 einen Exzenter 30. Der Exzenter 30 ist drehgelagert fest mit dem Gestell 14 verbunden und besitzt eine Exzenterscheibe 31, an der eine Exzenterstange 32 angreift, die wiederum mit dem Rahmen des Wagens an der Anlenkstelle 33 verbunden ist. Bei jeder Drehung der Exzenterscheibe 31 macht die Förderstrecke 13 folglich eine Vor- und Rückbewegung in Förderrichtung F.

Die Förderrichtung F ist die Laufrichtung der Förderketten 19 des Kettenförderers. Hierbei handelt es sich um zwei parallel laufende Ketten, wobei zwischen diesen beiden endlosen Ketten Schalen 40 angeordnet sind. Die Schalen 40 dienen der Aufnahme der zu fördernden Tuben oder Hülsen T. Die Schalen 40 des Kettenförderers sind hier vorzugsweise so angeordnet, dass ihre offenen Seiten immer zur Aussenseite der geschlossenen Schlaufe gerichtet sind. Dies ist im Gegensatz zu den Schalen des Kettenförderers der Packmaschine, wo die Schalen als Gondeln 40' gestaltet sind, und somit deren offenen Seiten immer der Schwerkraft nach ausgerichtet, mit der oberen offenen Seite zwischen den entsprechenden Ketten des hier vorhandenen Kettenförderers der Packmaschine hängen.

Selbstverständlich ist der Antrieb des Exzenters 30 mit einer Geschwindigkeit betrieben, die in direktem Zusammenhang mit der Antriebsgeschwindigkeit der Ketten 19 des Kettenförderers in Relation steht und selbstverständlich ebenso mit der Grösse der Gruppen von Tuben oder Hülsen T, die von der Produktionsmaschine 2 auf die Übernahmevorrichtung 1 übergeben werden sollen. Hierauf wird nachfolgend eingegangen und gleichzeitig die Wirkungsweise der erfindungsgemässen Vorrichtung erläutert.

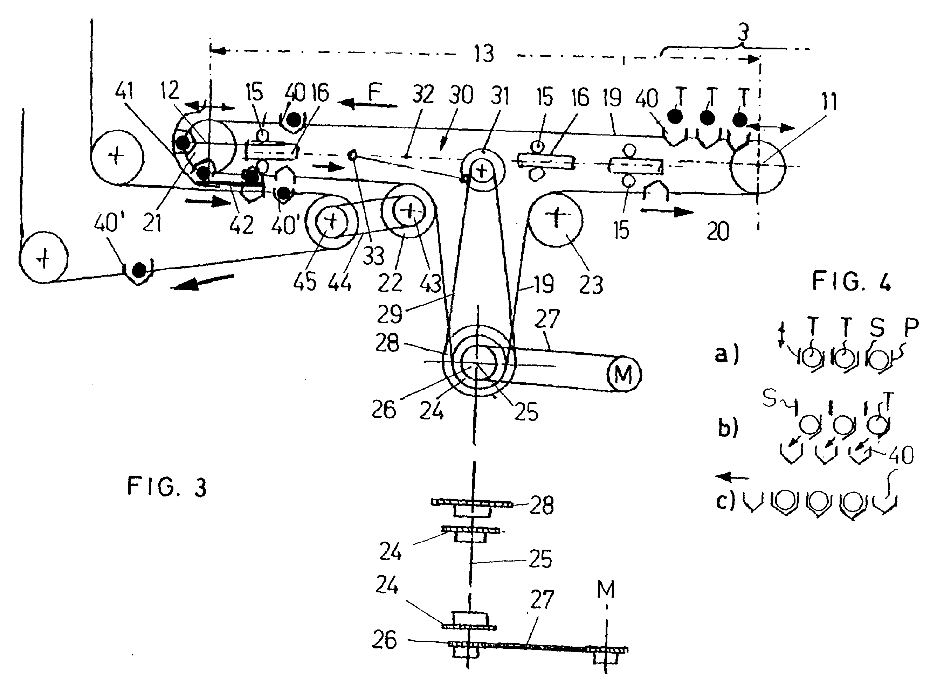

Üblicherweise kommen die Tuben oder Hülsen T wie in der Figur 4a dargestellt in Prismenschalen P zur Übergabestrecke 3 der Produktionsmaschine.

Im Übergabebereich werden die Prismenschalen in einer geschwenkten Lage gehalten, während gleichzeitig Schieber S diese gegen ein Herausfallen sichern. In einem gewissen Rhythmus werden die Schieber S hochgezogen, wie dies in der Figur 4b dargestellt ist, und die Tuben oder Hülsen T rollen aus den Prismenschalen P und fallen in die Schalen 40 des Kettenförderers. Während dieser Zeit müssen die Schalen 40 praktisch stillstehen. Dies wird dadurch erzeugt, dass die Förderstrecke 13 sich nun um den Hub des Exzenters 30 nach rechts verschiebt, während gleichzeitig jedoch die Ketten des Kettenförderers mit konstanter Geschwindigkeit weiterlaufen. Die Verschiebegeschwindigkeit des Wagens, der auf der Leitschiene 16 rollt, wird dabei mindestens annähernd mit derselben Geschwindigkeit wie die Förderkette verschoben. Da somit die Geschwindigkeit der Verschiebung der Förderstrecke 13 nach rechts praktisch mit derselben Geschwindigkeit wie die Ketten 19 des Kettenförderers weiterlaufen, heben sich die beiden Bewegungen praktisch auf, so dass während dieser Zeit, relativ gesehen, die Schalen 40 am Ort verbleiben. Die Tuben oder Hülsen haben somit genügend Zeit, um in die Schalen 40 zu fallen, worauf dann eine Umkehr der Hin- und Herbewegung der Förderstrecke 13 erfolgt, wobei nun die Bewegungsgeschwindigkeiten der Förderstrecke und der Ketten 19 gleichgerichtet sind und sich somit addieren. Während die Schalen nun gefüllt mit den Tuben oder Hülsen T weggefördert werden, wie dies die Figur 4c zeigt, werden bei der Produktionsmaschine drei weitere Prismenschalen gefüllt mit Tuben oder Hülsen zugeführt und die Situation, wie in der Figur 4a dargestellt, stellt sich wiederum ein. Um die entsprechend korrekte Taktung zu erreichen, muss die Fördergeschwindigkeit des Kettenförderers, d. h. die Geschwindigkeit, mit der die Ketten 19 angetrieben sind, auf die Geschwindigkeit der Produktionsmaschine eingestellt sein.

Die gefüllten Schalen 40 laufen nun über die gesamte Förderstrecke 13 hinüber zur Endumlaufachse an der Abgabeseite. An dieser Seite ist ein Leitblech 41 angeordnet, welches sich praktisch um den halben Umfang distanziert um die Höhe der Schalen 40 um die Kettenräder 21 herum verläuft. Bei 42 ist dieses Leitblech 41 um eine gewisse Strecke gerade verlaufend weitergezogen und die sich in den Schalen 40 befindenden Tuben oder Hülsen laufen in diesem Bereich rollend auf der Verlängerung 42 des Leitbleches 41. Unterhalb des Leitbleches im Verlängerungsbereich 42 befindet sich bereits der Kettenförderer der Übergangsstrecke 5 der Packmaschine 4. Dessen Schalen sind nach oben gerichtet offen, während die Schalen des Kettenförderers der Übernahmevorrichtung 1 nach unten offen in diesem Bereich verlaufen. Da die Ketten sowohl der Übernahmevorrichtung 1 als auch des Kettenförderers, der zur Packmaschine gehört, absolut synchron laufen und die Schalen entsprechend aufeinander ausgerichtet sind, fallen am Ende der Verlängerung 42 des Leitbleches 41 die Tuben oder Hülsen automatisch in die Schalen des Kettenförderers, der zur Packmaschine gehört.

Das halbkreisförmige Leitblech 41 muss selbstverständlich am Wagen der Förderstrecke 13 befestigt sein und mit dieser folglich mitlaufen. Hingegen ist die Verlängerung 42 vom Leitblech 41 getrennt und entweder am Gestell 14 oder an der Übergabestrecke 5 fest montiert, so dass der eigentliche Abgabeort an den Kettenförderer der Packmaschine stationär ist.

Besonders vorteilhaft ist eine Lösung, bei der das Umlenkkettenrad 22 auf einer Welle läuft, auf der ein zweites Kettenrad 43 angeordnet ist, welches über einer Transmissionskette 44 auf ein Kettenrad 45 wirkt, welches nunmehr auch den Kettenförderer der Packmaschine antreibt. Durch diese Lösung ist immer ein synchrones Laufen der Ketten beider Kettenförderer, nämlich des Kettenförderers der Packmaschine und dem Kettenförderer der Übernahmevorrichtung, gesichert. Zudem wird hierdurch nur eine Antriebsvorrichtung erforderlich.

Die Länge der Verlängerung 42 des Leitbleches 41 sollte mindestens annähernd der Länge des Hubes des Exzenters 30 entsprechen. Selbstverständlich kann diese Strecke jedoch auch länger sein. Im Übergabebereich ist zwischen dem Kettenförderer der Übernahmevorrichtung und der Kette des Kettenförderers der Packmaschine die relative Geschwindigkeit zueinander gleich 0.

Erste Dauerversuche mit der erfindungsgemässen Vorrichtung haben gezeigt, dass im Gegensatz zu bekannten Lösungen über viele Stunden hinweg praktisch keine Störungen auftreten. Auch kommen die Hülsen oder Tuben T während des gesamten Transportes von der Produktionsmaschine zur Packmaschine nie miteinander in Berührung und sind daher keinerlei Belastungen ausgesetzt, die zu entsprechenden Deformationen führen können.

### Liste der Bezugszahlen

- 1: Übernahmevorrichtung
- 2: Produktionsmaschine
- 3: Übergabestrecke der Produktionsmaschine
- 4: Packmaschine
- 5: Übergabestrecke der Packmaschine

- 10: Endlos-Kettenförderer
- 11: Endumlaufachse, annahmeseitig
- 12: Endumlaufachse, abgabeseitig
- 13: Förderstrecke
- 14: Gestell
- 15: Wagenrollen
- 16: Laufschiene
- 19: Förderketten
- 20 - 24: Kettenräder
- 25: Welle
- 26, 27: Kettenrad
- 28: Exzenterantriebskettenrad
- 29: Kette
- 30: Exzenterantrieb
- 31: Exzenterscheibe
- 32: Exzenterstange
- 33: Anlenkstelle

- 40: Schalen
- 40': Gondeln
- 41: Leitblech
- 42: Verlängerung
- 43, 45: Kettenräder zum Antrieb des Kettenförderers der Packmaschine
- 44: Transmissionskette

- F: Förderrichtung
- M: Antriebsmotor
- P: Prismenschalen
- S: Schieber
- T: Tuben und Hülsen

## Patentansprüche

1. Vorrichtung (1) zur diskontinuierlichen Übernahme von Hülsen oder Tuben von einer Produktionsmaschine (2) und zur kontinuierlichen Abgabe an eine Packmaschine (4), die je eine fest angeordnete Übergabestrecke (3, 5) aufweisen, **dadurch gekennzeichnet, dass** die Vorrichtung (1) ein endlos Kettenförderer (10) mit Schalen (40) umfasst, dessen Förderstrecke (13) relativ zur Produktionsmaschine (2) und Packmaschine (4) in Förderrichtung der Förderstrecke (13) vor und zurück bewegbar ist.

2. Vorrichtung nach Patentanspruch 1, **dadurch gekennzeichnet, dass** die Förderstrecke (13) ein Wagen ist, mit einem Rahmen, in dem die beiden Endumlenkachsen (11, 12) des Kettenförderers (10) angeordnet sind, sowie mehreren Wagenrollen (15), die auf einer festen Laufschiene (16) rollen und auf denen sich die Förderstrecke (13) abstützt.

3. Vorrichtung nach Patentanspruch 1, **dadurch gekennzeichnet, dass** die Förderstrecke (13) mittels einem Exzenterantrieb (30) in Förderrichtung (F) vor und zurück bewegbar ist.

4. Vorrichtung nach Patentanspruch 3, **dadurch gekennzeichnet, dass** ein Antriebsmotor (M) vorhanden ist, der gleichzeitig den Exzenterantrieb (30) und den Kettenförderer (10) antreibt.

5. Vorrichtung nach Patentanspruch 4, **dadurch gekennzeichnet, dass** der Antriebsmotor (M) zusätzlich auch einen Kettenförderer der Packmaschine (4) treibt.

6. Vorrichtung nach Patentanspruch 1, **dadurch gekennzeichnet, dass** die Förderstrecke (13) im Bereich der Endumlenkachse (12) auf der Seite der Packmaschine (4) mit einem Leitblech (41) versehen ist, welches sich von der horizontalen oberen Zufuhrseite bis zur horizontalen unteren Übergabestrecke und mittels einer getrennten Verlängerung (42) um mindestens den Hub des Exzenters (30) zwischen der Übergabestrecke (5) der Packmaschine und dem Rücklauf des Kettenförderers (10) erstreckt.

7. Vorrichtung nach Patentanspruch 1, **dadurch gekennzeichnet, dass** die Schalen (40) so an den Ketten (19) des Kettenförderers befestigt sind, dass deren Öffnung immer zur Aussenseite der geschlossenen Kettenschlaufe gerichtet ist.
